Europäisches Patentamt

European Patent Office

Office européen des brevets

(11) Publication number : **0 144 011 B2**

(12) **NEW EUROPEAN PATENT SPECIFICATION**

(45) Date of publication of the new patent specification : **23.12.92 Bulletin 92/52**

(51) Int. Cl.⁵ : **B65D 30/26**

(21) Application number : **84113605.4**

(22) Date of filing : **10.11.84**

(54) **A laminate to be used by the manufacture of packings containing products releasing gases.**

(30) Priority : **18.11.83 DK 5289/83**

(43) Date of publication of application :
**12.06.85 Bulletin 85/24**

(45) Publication of the grant of the patent :
**28.09.88 Bulletin 88/39**

(45) Mention of the opposition decision :
**23.12.92 Bulletin 92/52**

(84) Designated Contracting States :
**AT BE CH DE FR GB IT LI LU NL SE**

(56) References cited :
**AU-A- 23 294**
**DE-A- 3 202 032**
**FR-A- 2 464 895**
**GB-A- 1 401 713**
**GB-A- 1 488 326**

(56) References cited :
**GB-A- 2 116 144**
**SE-B- 424 839**
**US-A- 2 046 146**
**US-A- 2 361 344**
**US-A- 2 593 328**
**US-A- 3 248 041**
**US-A- 3 512 632**
**US-A- 3 672 915**
**US-A- 4 134 535**

(73) Proprietor : **Raackmanns Fabriker A/S**
**Hattingvej 10**
**DK-8700 Horsens (DK)**

(72) Inventor : **Schulz, Werner**
**Monradsvejj 24**
**WK-8700 Horsens (DE)**

(74) Representative : **Vossius & Partner**
**Siebertstrasse 4 P.O. Box 86 07 67**
**W-8000 München 86 (DE)**

EP 0 144 011 B2

## Description

The invention relates to a laminate of the type stated in the preamble of claim 1 and known from DE-A-32 02 032. Said known laminate comprises an inner plastic layer with perforations whereas the outer layer is made of paper. Said paper layer is not gastight so that remaining gas may diffuse through the outer layer. Thus, this known laminate allows diffusion of gas from the inside to the outside and vice versa, i.e. in both directions.

Before gas-releasing products such as freshly ground coffee can be packed the product must today stand for some time in order to permit release of the gases. These products require therefore much store room, and the above is consequently a delaying step in the packing procedure. Bags with valves are inter alia used for the packing, said valves ensuring that the product can continue to release gases. The expenses involved in the manufacture of the valve and in the welding procedure amount approximately to DKr. 0,20 or more per bag. The storability of for instance ground coffee packed in such a bag is at least 6 months. No tight packings are today used for the roasted coffee beans, since said roasted coffee beans cannot at all release the gases during a reasonable time. Consequently, roasted coffee beans and other gas-releasing products are preferably packed in packings made of glued paper and film

The object of the present invention is to provide a laminate permitting a less expensive and more simple manufacture of packings with a one-way valve than previously.

The laminate according to the invention is characterised by the subject matter stated in the characterising clause of claim 1.

Since one of the outer layers of the laminate has not been laminated over a limited area to the adjacent, inner layer and since said limited area exceeds at least one welding line, a connection is provided during the manufacture of the packing. At least at one rim this connection is open to the surroundings. The perforation through the inner layer(s) provides a small opening to the interior of the manufactured packing, said opening allowing the gases formed in the packing to flow into the resulting portion. In this manner a packing such as a bag with a very simple one-way valve can be formed, which bag can be manufactured in a substantially less expensive manner than 'previously known packings of this type. As gases are always formed in packings after the filling in of the products, a slight overpressure exists in the packing made of the laminate. This overpressure oozes through the perforation and subsequently through the non-laminated area to the rim allowing the gas to exit into the surroundings. Since the nonlaminated area of the outer layer otherwise is always positioned tightly across the inner layer(s) and optionally adheres thereto, a seal is thereby provided which prevents oxygen from entering the interior of the packing and consequently from oxidizing the content of the packing, e.g. the coffee. As a result it is for instance in connection with coffee possible immediately after the roasting and the grinding, respectively, to fill the product into bags and thereby to avoid the time and room-consuming and work - involving intermediary storing allowing the product to release gases.

Preferred embodiments of the perforation and the non-laminated area have been stated in claims 2 to 5. So as to ensure additionally that oxygen cannot penetrate to the contents of the bag, it is often advantageous to position a film of liquid in the non-laminated area between the outer layer and the adjacent layer.

GB-A-1,401,713 discloses a plastics sack made from two layers of plastics film and comprises two panels overlapping each other in an area. In this area of overlap the two panels are sealed to each other providing a space therebetween. The lower panel consists in the area of overlap only of one layer of plastics film. This layer is provided with a plurality of microperforations providing communication between the interior of the sack and the space between the panels and an interruption in the seal between the mentioned two panels and provides communication from the space to the atmosphere whereby a communication from the interior of the sack and the atmosphere is provided.

This patent does not as the present invention disclose a true laminate comprising a non-laminated area and for manufacture of a packing such as a bag but a sack made from two layers of plastics film.

Further the space is provided by letting the panels overlap each other and can thus only be provided in connection with an overlap seal. Unlike the British patent the space according to the present invention is positioned between two layers of laminate, for which reason a great latitude is allowed with respect to the placing of the space in the finished packing.

The laminate according to the invention has been described below in connection with a packing in the form of a bag and with reference to the accompanying drawing, in which

Figure 1 is a section view in principal along the line I-I of Figure 2 through part of an example of a bag made of laminate according to the invention, whereby the individual laminate layers and a perforation have been shown with an exaggerated thickness and diameter, respectively, for the sake of clarity and

Figure 2 is a perspective view of part of the bag, whereby the position of the perforation has been indicated by a cross.

The laminate according to the invention is illustrated in connection with a bag 1, the walls of which are made of the laminate. From the interior of the bag to the outer side of said bag the laminate comprises in sequence an inner film 2 of plastics, a sheet 3 of aluminium, and an outer film 4 of plastics. The inner film 2 is preferably made of polyethylene, whereas the outer film of plastics is preferably made of polyester. Other plastic materials may, however, also be used. Prior to the filling, the sides of the bag are welded together along a bottom welding seam 5 and a back welding seam 12, and after the filling the bag is closed by a top welding 6. In sequence and seen as above other combinations of laminate apply such as for instance polyethylene film, non-coated polyester film, and metallized polyester film; or polyethyelene film, metallized polyester film, and noncoated polyester film. Other combinations may also be used whereby a printed paper sheet is inserted inside the non-coated polyester film. Still other combinations including other materials or more layers may be used.

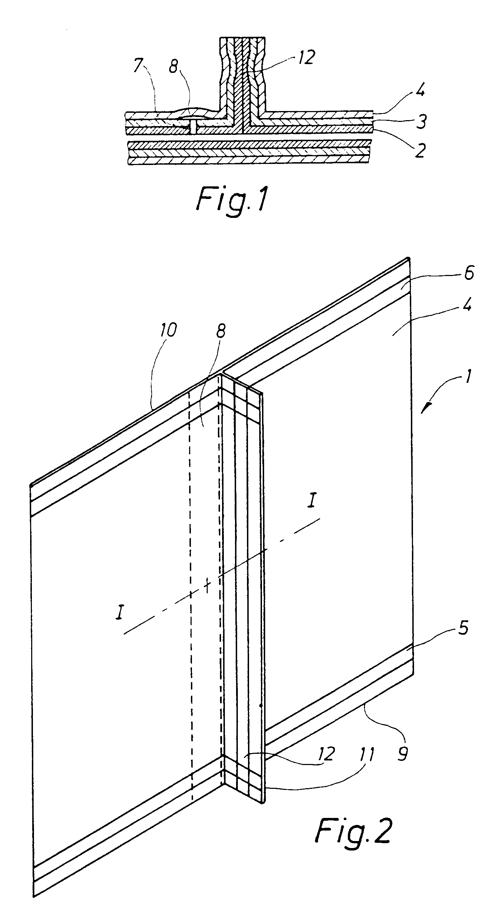

For instance the two inner laminate layers - the inner plastic film and the sheet of alumium in the shown example - are according to the invention perforated, preferably by means of cuts, pricks or stampings to form flow opening(s) 7, the position of which has been schematically marked by a cross in Figure 2. The dimensions of the laminate layers are exaggerated in Figure 1 for the sake of clarity since said laminate layers are of the thickness of a few hundred millimeters normally used for bags of this type.

In the area above the outlet opening, the outer film of plastics is not laminated to the sheet of aluminium, whereby a longitudinal channel 8 is formed. This channel 8 extends in the entire width of the laminate in such a manner that at the manufacture of the bag or another packing it extends beyond the bottom and top welding seams 5, 6 and for instance to the top and bottom rims 9 and 10, respectively, of the bag or the packing, respectively. This channel can also be shaped in such a manner that during the manufacture of the packing it ends only at one of the rims of the packing, especially the bag, e.g. the back rim 11 or only at either the bottom rim 9 or the top rim 10.

As a result, a very simple and inexpensive valve is formed by means of the non-laminated area of the outer film 4 and the outlet opening 7. The gases formed by the contents of the packing may flow through this valve to the surroundings. Since an overpressure exists in the bag or the packing, respectively, and since the outer film 4 usually adheres or at least tightly abuts the sheet of aluminium on account of the inner pressure, noxious gases such as for instance oxygen are prevented from flowing into the contents of the bag and consequently from oxidizing said contents. The outer film 4 serves thus in fact as a membrane which must be lifted by the inner gas pressure in the packing in order to release the gas.

According to a further development a small amount of liquid may be filled into the channel 8, said liquid for instance being water or oil treated with additives in such a manner that it does not go rancid prior to the product, e.g. coffee, filled in the bag becomes unfit for use.

When using the packing made of a laminate according to the invention, the product such as for instance freshly ground or freshly roasted coffee may be filled directly into the packing without an intermediary storing. This procedure is very economical both as to the time, space and work involved.

Though the longitudinal channel 8 of the illustrated bag in the drawing has been shown as a longitudinal channel of a width of approximately 1 cm, which provides a very simple manufacture of the channel, it is obvious that the non-laminated area can be substantially narrower or broader and have another shape, e.g. oval, provided the channel extends across at least one of the bottom, top or back welding seams 5, 612 and is open to at least one rim 9, 10, 11. In the drawing the channel 8 tightly abuts the back welding and is positioned parallel thereto, but the area not laminated to the sheet of aluminium of the outer film layer may also be positioned at an arbitrary location on the bag. Though the laminate used for the bag shown as an example in the illustrated example comprises three layers, it is obvious to a person skilled in the art that it is possible to manufacture corresponding one-way valves both in connection with double-layer laminates and in connection with laminates of several, e.g. four to seven different layers. It is also obvious that the non-laminated portion can be positioned between two arbitrarily chosen layers, e.g. the inner layer and an adjoining intermediate layer laminated thereto.

## Claims

1. A laminate for the manufacture of a packing (1) with a valve such as for instance a bag of a laminate welded along the bottom and back rims and in the filled state along the top rim, said packing being used for a product releasing gases, wherein one of the layers (4) of the laminate - viz. the layer which is to be outer layer of the finished packing - is laminated to the adjacent internally positioned layer (3) at first selected areas and is non-laminated thereto at second selected areas and tightly positioned across said internally positioned layer (3) in said non-laminated areas, said non-laminated areas communicating with the surroundings of the finished packing, the remaining inner laminate layer(s) (3,2) being perforated within the non-laminated areas, said perforation being placed to form an open connection between the interior and the non-laminated areas of the finished packing, and characterized in that said one outer layer (4) is laminated to said internally positioned layer (3) substantially over the entire extension of the laminate and that said one outer layer (4) is made of a gastight material so as to form a one-way valve preventing gas flow into the packing via said perforation (7).

2. A laminate as claimed in claim 1, characterised in that said non-laminated area extends across at least one welding line (5, 6, 12) and ends at at least one of the rims (9, 10, 11 ) of the packing.

3. A laminate as claimed in claims 1 and 2 and where the layers of the laminate - seen in the finished packing from the interior thereof to its outer side - in sequence are an inner film (2) of plastics such as for instance polyethylene, an intermediate layer of a sheet (3) of aluminium or of metallized or non-coated polyester film, and an outer film (4) of plastics such as for instance noncoated or metallized, respectively, polyester, which laminate may comprise further intermediate layers, characterised in that said nonlaminated area forms a channel (8), and that inside the inner area defined by the welding lines (5, 6) of the finished packing and the area defined by the rims of the channel (8) of the finished packing, a perforation is provided which only extends through the inner film (2) and the sheet (3).

4. A laminate as claimed in claim 1 or 3, characterised in that the perforation (7) is one or more cuts or a single or a few pricks or stampings through the inner layer(s), especially through the inner film (6) and the aluminium sheet (3).

5. A laminate as claimed in claim 3 or 4, characterised in that the channel (8) is of a width ranging from approximately 2 mm to approximately 20 mm, and that it is constructed so as to extend across at least one of the welding lines (5, 6, 12) of the finished packing to the rims (9, 10, 11) thereof.

6. A laminate as claimed in claim 5, charcterised in that the channel (8) in the finished packing is located in such a manner that in the finished packing it can extend parallel to and a short distance ranging from 0 to 10 mm from the longitudinal back welding line (11) of said finished packing.

7. A laminate as claimed in one of the claims 1-6, characterised in that a liquid film is provided between the outer layer (4) and the adjacent layer of the non-laminated area and the channel (8), respectively.

8. A laminate as claimed in claim 7, characterised in that the liquid is a vegetable oil compatible with the product to be filled in said packing.

## Patentansprüche

1. Ein Laminat für die Herstellung einer Verpackung (1) mit einem Ventil, wie beispielsweise ein Beutel, aus einem Laminat, das längs des Bodenrandes und Rückrandes und im gefüllten Zustand längs des Deckrandes verschweißt ist, wobei die Verpackung für ein Gase freisetzendes Produkt verwendet wird, wobei eine der Schichten (4) des Laminats - nämlich die Schicht, die die Außenschicht der fertigen Verpackung bilden soll - an die anstoßende, innen positionierte Schicht (3) in ersten ausgewählten Bereichen anlaminiert und in zweiten ausgewählten Bereichen nicht laminiert ist und in diesen nicht laminierten Bereichen über die innen positionierte Schicht (3) eng anliegend positioniert ist, wobei die nicht laminierten Bereiche mit der Umgebung der fertigen Verpackung kommuniziert, die verbleibende innere Laminatschicht(en) (3, 2) innerhalb der nicht laminierten Bereiche perforiert ist (sind) und die Perforation so angeordnet ist, daß sie eine offene Verbindung zwischen dem inneren und dem nicht laminierten Bereich der fertigen Verpackung bildet, **dadurch gekennzeichnet,** daß die eine Außenschicht (4) im wesentlichen über die gesamte Erstreckung des Laminats an die innen positionierte Schicht (3) anlaminiert ist und daß die eine Außenschicht (4) aus einem gasdichten Material besteht, so daß ein Einwege-Ventil gebildet wird, das eine Gasströmung in die Verpackung über der Perforation (7) verhindert.

2. Ein Laminat nach Anspruch 1, dadurch gekennzeichnet, daß der nicht laminierte Bereich sich über mindestens eine Schweißlinie (5, 6, 12) hinaus erstreckt und an mindestens einem der Ränder (9, 10, 11) der Verpackung endet.

3. Ein Laminat nach Ansprüchen 1 und 2 und wobei die Schichten des Laminats - gesehen in der fertigen Verpackung vom Inneren derselben zur Außenseite - in Abfolge sind: Eine Innenfolie (2) aus Kunstoff wie beispielsweise Polyäthylen, eine Zwischenfolie aus einem Blatt (3) aus Aluminium oder metallisierter oder nicht beschichteter Polyesterfolie, und einer Außenfolie (4) aus Kunstoff, wie beispielsweise unbeschichtetes oder metallisiertes Polyester, welches Laminat ferner Zwischenschichten umfassen kann, dadurch gekennzeichnet, daß der genannte nicht laminierte Bereich einen Kanal (8) bildet und daß innerhalb des inneren Bereiches, definiert durch die Schweißlinien (5, 6) der fertigen Verpackung und dem durch die Ränder des Kanals (8) der fertigen Verpackung definierten Bereich eine Perforation vorgesehen ist, die sich nur durch die innere Folie (2) und das Blatt (3) erstreckt.

**4.** Ein Laminat nach Anspruch 1 oder 3, dadurch gekennzeichnet, daß die Perforation (7) einen oder mehrere Schnitte oder einen oder mehrere Durchstiche oder Stanzungen durch die innere Schicht(en) umfaßt, insbesondere durch die innere Folie (6) und das Aluminiumblatt (3).

**5.** Ein Laminat nach Anspruch 3 oder 4, dadurch gekennzeichnet, daß der Kanal (8) eine Breite aufweist, die von etwa 2 mm bis etwa 20 mm reicht und daß er so aufgebaut ist, daß er sich über mindestens eine der Schweißlinien (5, 6, 12) der fertigen Verpackung zu deren Rändern (9, 10, 11) erstreckt.

**6.** Ein Laminat nach Anspruch 5, dadurch gekennzeichnet, daß der Kanal (8) in der fertigen Verpackung derart positioniert ist, daß er sich in der fertigen Verpackung parallel in geringem Abstand zwischen 0 und 10 mm von der in Längsrichtung verlaufenden rückseitigen Schweißlinie (11) der genannten fertigen Verpackung erstrekken kann.

**7.** Ein Laminat nach einem der Ansprüche 1 bis 6, dadurch gekennzeichnet, daß ein Flüssigkeitsfilm zwischen der äußeren Schicht (4) und der benachbarten Schicht des nicht laminierten Bereichs bzw. dem Kanal (8) vorgesehen ist.

**8.** Ein Laminat nach Anspruch 7, dadurch gekennzeichnet, daß die Flüssigkeit ein vegetabiles Öl ist, kompatibel mit dem in die genannte Verpackung abzufüllenden Produkt.

**Revendications**

**1.** Stratifié pour la fabrication d'un emballage (1) comportant une valve, comme par exemple un sac constitué d'un stratifié soudé le long des bords du fond et du dos et, à l'état rempli, le long du bord supérieur, ledit emballage étant utilisé pour un produit libérant des gaz, dans lequel l'une des couches (4) du stratifié - c'est à dire la couche qui est destinée à être la couche externe de l'emballage final - est appliquée sur la couche interne (3) adjacente, sur des premières surfaces selectionées et n'y est pas appliquée sur des secondes surfaces sélectionées et positionnées étanchement en travers de la couche interne (3) disposée à l'intérieur des surfaces non stratifiées, lesdites surfaces nonstratifiées communicant avec l'entourage de l'emballage final, la (les) couche(s) intérieure(s) (32) restantes étant perforées dans lesdites surfaces non-stratifiées, lesdites perforations étant disposées pour former une connexion ouverte entre l'intérieur et lesdites surfaces non-stratifiées de l'emballage final, et caractérisé en ce que ladite couche extérieure (4) est appliquée sur ladite couche (3) disposée à l'intérieur, pratiquement sur toute l'étendue du stratifié et que ladite couche extérieure (4) est constituée par un matériau étanche au gaz pour former une valve unilatérale qui empêche l'évacuation du gaz dans l'emballage par ladite perforation (7).

**2.** Stratifié selon la revendication 1, caractérisé en ce que ladite zone non stratifiée s'étend en travers d'au moins une ligne de soudure (5, 6, 12) et se termine au niveau d'au moins un des bords (9, 10, 11 ) de l'emballage.

**3.** Stratifié selon les revendications 1 et 2, et dans lequel les couches de stratifié - vu, dans l'emballage final, de l'intérieur de celui-ci vers son côté extérieur - consistent successivement en une pellicule interne (2) de matière plastique, comme par exemple de polyéthylène, une couche intermédiaire en une feuille (3) d'aluminium ou un film de polyester métallisé ou non revêtu, et une pellicule externe (4) de matière plastique, comme par exemple de polyester respectivement non revêtu ou métallisé, lequel stratifié peut comprendre d'autres couches intermédiaires, caractérisé par le fait que la zone non stratifiée forme un canal (8) et par le fait qu'à l'intérieur de la zone interne définie par les lignes de soudure (5, 6) de l'emballage final et la zone définie par les bords du canal (8) de l'emballage final, est ménagée une perforation qui ne s'étend qu'à travers la pellicule interne (2) et la feuille (3).

**4.** Stratifié selon la revendication 1 ou 3, caractérisé par le fait que la perforation (7) consiste en une ou plusieurs entailles ou en un seul ou quelques piqûres ou trous de poinçonnage, pratiqués à travers la ou les couches internes, en particulier à travers la pellicule interne (2) et la feuille d'aluminium (3).

**5.** Stratifié selon la revendication 3 ou 4, caractérisé par le fait que le canal (8) est d'une largeur allant d'environ 2 mm à environ 20 mm, et par le fait qu'il est conçu de manière à s'étendre en travers d'au moins une des lignes de soudure (5, 6, 12) de l'emballage final, vers les bords (9, 10, 11) de celui-ci.

**6.** Stratifié selon la revendication 5, caractérisé par le fait que le canal (8) dans l'emballage final est situé de telle manière qu'il peut, dans l'emballage final, s'étendre parallèlement à la ligne de soudure longitudinale (11) du dos dudit emballage final, et à une faible distance, allant de 0 à 10 mm, de celle-ci.

7. Stratifié selon l'une des revendications 1 à 6, caractérisé par le fait qu'on introduit un film de liquide entre le couche extrene (4) et la couche adjacente de la zone non stratifiée et du canal (8), respectivement.

8. Stratifié selon la revendication 7, caractérisé par le fait que le liquide est une huile végétale compatible avec le produit à introduire dans ledit emballage.

*Fig.1*

*Fig.2*